(19) Europäisches Patentamt / European Patent Office / Office européen des brevets

(11) **EP 2 597 446 B1**

(12) **FASCICULE DE BREVET EUROPEEN**

| | |
|---|---|
| (45) Date de publication et mention de la délivrance du brevet: **14.08.2019 Bulletin 2019/33** | (51) Int Cl.: ***G01M 3/02*** *(2006.01)*     ***G01M 3/28*** *(2006.01)*<br>***G01N 15/08*** *(2006.01)* |

(21) Numéro de dépôt: **12193876.5**

(22) Date de dépôt: **22.11.2012**

(54) **Dispositif pour la mesure de la perméabilité de bouchons de bouteilles et méthode correspondante**

Vorrichtung zum Messen der Durchlässigkeit von Flaschenkorken, und entsprechende Methode

Device for measuring the permeability of bottle corks and corresponding method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2011 FR 1160700**

(43) Date de publication de la demande:
**29.05.2013 Bulletin 2013/22**

(73) Titulaire: **DIAM BOUCHAGE**
**66400 Ceret (FR)**

(72) Inventeurs:
• **Rabiot, Dominique**
  **66300 SAINT JEAN LASSEILLE (FR)**

• **Bosch, Philippe**
  **66100 Amélie les Bains Palalda (FR)**

(74) Mandataire: **Casalonga**
**Casalonga & Partners**
**Bayerstraße 71/73**
**80335 München (DE)**

(56) Documents cités:
| | |
|---|---|
| WO-A1-98/03850 | WO-A1-2011/089367 |
| DE-B- 1 063 832 | US-A- 3 548 634 |
| US-A1- 2004 040 372 | US-A1- 2004 123 646 |
| US-A1- 2004 134 258 | US-A1- 2007 227 233 |
| US-A1- 2008 060 418 | |

EP 2 597 446 B1

## Description

L'invention a pour objet un dispositif pour mesurer la perméabilité à certains gaz d'un bouchon, notamment d'un bouchon épais ou d'un joint de bouteille ou un bocal. Dans le cas de bouteilles, flacons ou bouchons ou de bocaux destinés à contenir des aliments ou des boissons, on peut par exemple s'intéresser à la perméabilité du bouchon à l'oxygène, qui en entrant dans la bouteille ou dans le bocal peut oxyder l'aliment ou la boisson qui y est contenu.

On peut également s'intéresser à la perméabilité du bouchon, à des gaz dégagés par l'aliment ou la boisson contenu dans la bouteille ou le bocal, par exemple à la perméabilité du bouchon au dioxyde de carbone présent dans les boissons effervescentes telles que le champagne.

On peut se référer au document US 2007/227233 - A1 qui décrit une installation pour mesurer la perméabilité d'échantillons de types plaques ou films.

On peut également se référer aux documents WO 2011/089367 - A1, US 3 548 634 - A, US 2004/123646 - A1 et DE 10 63 832 - B qui décrivent différents systèmes de mesure de perméabilité.

Des méthodes de mesure de la perméabilité d'un gaz au travers de membranes de matériaux divers sont par exemple décrites dans les normes ASTM D 1434-82, ASTM F 2622-08, ASTM F 1927-07, ASTM F 1307-02 ou dans la norme NF EN Iso 2556 de février 2001.

Ces méthodes, et les dispositifs associés ne sont cependant pas adaptés pour mesurer la perméabilité de bouchons épais tels que les bouchons en liège ou les bouchons en matière synthétique remplaçant les bouchons en liège, dont l'épaisseur est sensiblement plus importante que le diamètre, et qui ne peuvent donc être assimilés à des membranes.

Du fait de l'épaisseur de matière à traverser, les quantités de gaz que l'on peut collecter en aval d'un bouchon sont plus faibles que dans les dispositifs de mesure traditionnellement utilisés pour des membranes. En outre, afin que la mesure soit représentative des conditions de fonctionnement réelles du bouchon, on souhaite utiliser comme pression de gaz appliquée au bouchon une pression proche de celle existant dans les conditions réelles, par exemple une pression de l'ordre de l'atmosphère pour mesurer la perméabilité à l'oxygène.

L'invention a pour but un dispositif permettant d'obtenir des mesures fiables et reproductibles de la perméabilité d'un bouchon en limitant le nombre de manipulations à effectuer par l'opérateur, et permettant d'obtenir un résultat de mesure au bout d'un temps d'essai relativement court, c'est-à-dire de l'ordre du jour ou de la semaine.

Parmi les installations proposées pour mesurer la perméabilité de bouchons à l'oxygène, on trouve par exemple des bancs sur lesquels on installe des cols de bouteilles modifiés, munis de bouchons, les bouchons étant par l'extérieur du col de la bouteille, à l'atmosphère ambiante et étant soumis sur leur face "interne à la bouteille" à un flux de gaz neutres. Des détecteurs d'oxygène, par exemple basés sur les méthodes coulométriques, permettent de mesurer le flux d'oxygène traversant le bouchon, une fois un régime de diffusion établi au travers du bouchon. Ces détecteurs comptabilisent des échanges électroniques entre les molécules d'oxygène et un détecteur électrochimique, qu'il faut changer périodiquement quand il ne dispose plus d'une quantité suffisante de sites réactifs. Ces détecteurs sont onéreux et fragiles (l'élément de détection de doit pas venir en contact avec l'air, sous peine de se saturer irréversiblement). De ce fait on ne branche le col de bouteille factice au détecteur qu'au moment de la mesure, le col factice étant placé le reste du temps sur un banc d'alimentation en gaz neutres sans détecteur.

Au coût élevé de l'appareillage s'ajoute donc le coût de la main d'oeuvre nécessaire pour brancher et débrancher successivement les cols factices et effectuer des mesures.

Un autre but de l'invention est de proposer un dispositif de mesure de perméabilité utilisant des capteurs largement disponibles sur le marché, ce qui permet de laisser le capteur installé sur chaque cellule de mesure pendant toute la durée de l'essai. On limite ainsi les coûts de manutention et les artefacts expérimentaux liés au montage ou au démontage d'une cellule en vue de la brancher sur le détecteur.

On souhaite en outre un dispositif qui permette de mesurer la perméabilité du bouchon à n'importe quel gaz. Les détecteurs de type OXTRAN Mocon (OTR pour « Oxygen Transmission Rate ») sont spécifiques à la détection d'un seul gaz, par exemple l'oxygène, le dioxyde de carbone ou la vapeur d'eau.

A cette fin, un dispositif pour la mesure de la perméabilité aux gaz d'au moins un bouchon, notamment d'un bouchon de bouteille ou de bocal, comprend :

- une cellule de mesure dans laquelle le ou les bouchons peuvent être montés de manière à délimiter une chambre amont au(x) bouchon et une chambre aval au bouchon, des échanges gazeux n'étant possibles entre la chambre amont et la chambre aval qu'en traversant les bouchons,
- une alimentation en gaz permettant d'imposer dans la chambre amont une pression amont d'un premier gaz, de première valeur de pression prédéfinie,
- un dispositif de pompage aval permettant d'imposer dans la chambre aval une dépression initiale de deuxième valeur prédéfinie, inférieure à la première valeur, puis d'isoler la chambre aval d'échanges gazeux autres que ceux traversant le bouchon,

Par bouchon on entend dans la suite du texte sauf précision contraire, un élément de fermeture et d'étanchéité de type bouchon ou capsule, apte à assurer la fermeture du goulot d'une bouteille ou d'un bocal soit par insertion dans le goulot, soit par sertissage, vissage ou autre mode d'assemblage avec la partie supérieure du goulot.

Le dispositif comprenant en outre un capteur de pression connecté à la chambre aval, la chambre aval étant configurée pour définir, en présence du bouchon, un premier volume ayant pour valeur un volume réel de la chambre aval qui reste constant lorsque la pression intérieure de la chambre aval varie entre la pression appliquée et la dépression initiale, le volume réel de la chambre aval ayant pour limite inférieure, en fonction des positions d'insertion de différents bouchons, un volume minimal de la chambre aval.

La chambre aval est reliée par une première vanne avec une chambre de dosage également de volume constant, la chambre de dosage étant disposée de manière à, quand la première vanne est fermée, pouvoir être successivement reliée à, et isolée d'avec, l'atmosphère ou une alimentation en gaz, le volume de la chambre de dosage étant compris entre 0,5 et 10 fois le volume minimal de la chambre aval.

Le dispositif comprend en outre une unité de commande configurée pour évaluer, pour chaque nouvelle mesure de perméabilité d'un bouchon, le volume réel de la chambre aval en présence de ce bouchon en comparant le volume réel de la chambre aval avec le volume de la chambre de dosage.

On peut par exemple considérer que le volume d'une chambre reste constant s'il ne varie pas au-delà de 2% de son volume initial.

Le dispositif comprend un capteur de pression en amont de la première vanne, placé de manière à permettre d'effectuer des mesures de pression dans la chambre aval, que la première vanne soit ouverte ou fermée.

Selon un mode de mise en oeuvre préféré, le volume minimal de la chambre aval est inférieur à $10cm^3$, et de préférence est inférieur à $5cm^3$. Un volume réduit de la chambre aval permet en effet d'obtenir une élévation de pression mieux détectable pour une même quantité de gaz traversant le ou les bouchons à évaluer.

La chambre de dosage peut par exemple comprendre une ou plusieurs portions de conduite délimitées par des vannes, dont une vanne à la frontière entre la chambre aval et la chambre de dosage. Une des vannes peut permettre la mise à l'atmosphère de la chambre de dosage. Les portions de conduites et la vanne de mise à l'atmosphère sont de préférence agencées de manière à permettre un remplissage complet de la chambre de dosage avec un liquide, et la collecte aisée de la totalité de ce liquide par gravité. On peut prévoir de vérifier périodiquement le volume exact de la chambre de dosage, en la remplissant d'un liquide et en déterminant ensuite le volume de liquide par pesée ou par mesure volumique.

Avantageusement, le volume de la chambre de dosage est compris entre 0,5 et 10 fois le volume minimal de la chambre aval, et de préférence est compris entre 0,5 et 5 fois le volume minimal de la chambre aval. Un écart plus important entre les volumes des deux chambres rendrait difficile l'évaluation du volume réel de la chambre aval.

Par volume minimal de la chambre aval, on entend le volume minimal disponible dans la chambre aval quand un bouchon ou quand chaque bouchon d'un groupe de bouchons, est inséré dans la cellule jusqu'à une position de butée dans laquelle le volume de la chambre aval est le plus faible, par rapport à d'autres position où tous les bouchons ne seraient pas en position de butée. Par volume réel de la chambre aval, on entend le volume de la chambre aval une fois qu'un bouchon quelconque est placé dans la cellule, ou qu'un groupe de bouchons quelconques sont placés dans la cellule, en comptabilisant le volume supplémentaire de la chambre aval dû au fait que tous les bouchons ne sont pas en position de butée.

Par dépression, on entend ici une valeur absolue de pression qui est à la fois inférieure à la pression atmosphérique et inférieure à la pression de l'alimentation en gaz. On peut par exemple choisir une dépression correspondant à une pression absolue inférieure à 1 mbar, ou de préférence inférieure à 0.1 mbars. Suivant la précision du capteur de mesure, on peut éventuellement choisir une dépression initiale inférieure à 0.001 mbars.

Avantageusement, une deuxième vanne du dispositif permet d'isoler la chambre amont de l'alimentation en gaz, et le dispositif comprend une conduite de dérivation obturable par une troisième vanne, cette conduite de dérivation étant disposée entre la chambre amont et la chambre de dosage.

De manière préférentielle, la chambre de dosage est reliée au dispositif de pompage par une canalisation munie d'une quatrième vanne la séparant de la chambre de dosage.

La chambre de dosage peut être munie d'une cinquième vanne permettant de la faire communiquer avec l'atmosphère.

Selon un mode de réalisation préféré, le dispositif comprend une unité électronique de pilotage configurée pour enregistrer une suite de valeurs délivrées par le capteur de pression, sur un intervalle postérieur à une étape d'alimentation en gaz de la chambre amont, et/ou à une étape de mise à la dépression initiale de la chambre aval.

La cellule de mesure peut être configurée de manière à permettre d'interposer plusieurs bouchons en parallèle entre la chambre amont et la chambre aval.

Avantageusement, la cellule de mesure est configurée pour interposer entre la chambre amont et la chambre aval un ou plusieurs bouchons, disposés chacun à l'intérieur d'un contenant globalement cylindrique enserré entre une plaque de distribution de gaz faisant partie de l'enceinte de la chambre amont, et une plaque de collecte de gaz faisant partie de l'enceinte de la chambre aval.

La cellule de mesure peut être configurée de façon à ce que le volume de la cellule compris entre une frontière extérieure de la plaque de distribution au niveau d'une entrée de gaz, et le ou les supérieur au volume de la cellule compris entre le ou les bouchons et une frontière extérieure de la plaque de collecte au niveau d'une sortie de gaz. Le fait de construire, de manière à ce que son volume soit le plus faible possible, le volume compris entre l'aval du ou des bouchons et l'extérieur de la plaque de collecte, contribue à minimiser le volume de la chambre aval, qui joue sur la précision des calculs. Il est à noter que le volume de la chambre amont n'a pas besoin d'être connu pour effectuer les calculs de perméabilité. On peut éventuellement considérer que la chambre amont s'étend jusqu'à l'alimentation en gaz. Les ouvertures d'entrée de gaz de la plaque d'alimentation peuvent être plus larges que les ouvertures de sortie de gaz de la plaque de collecte, pour faciliter l'arrivée de la pression tout en minimisant le volume aval aux bouchons. Un volume plus conséquent en amont des bouchons permet d'éviter des chocs de pression lors de l'application d'une pression amont.

Selon un mode de réalisation particulier, la cellule de mesure comprend un col factice de bouteille dont la base est reliée de manière étanche à la plaque de collecte, et une bague extérieure apte à être assemblée par-dessus le col factice de manière étanche avec le col factice, et apte à être assemblée de manière étanche avec la plaque de distribution, de manière à ce que la chambre amont communique avec au moins une partie extérieure au col factice d'un bouchon ou d'une capsule assemblé(e) dans ou sur le col factice. Il est ainsi possible de tester non seulement la perméabilité d'un matériau ou des matériaux constituant le bouchon, mais aussi de tester l'étanchéité de l'ensemble goulot + bouchon, en faisant intervenir des phénomènes particulier telles que des diffusions d'interfaces, par exemple à l'interface entre le goulot et un joint élastomère tapissant l'intérieur d'une capsule métallique. Dans le cas d'un bouchon à capsule et muselet, la diffusion du gaz prise en compte inclut des phénomènes de diffusion se produisant selon diverses directions par rapport à l'axe du bouchon. Elle reproduit ainsi les phénomènes de diffusion perpendiculairement à l'axe, dans la partie libre du bouchon, non comprimée, et les phénomènes de diffusion parallèlement à l'axe dans la partie "insérée" du bouchon, comprimée par le col.

Selon un autre mode de réalisation particulier, la cellule de mesure comprend un col factice de bouteille dont la base est reliée de manière étanche à la plaque de collecte, et une bague extérieure, apte à être assemblée de manière étanche avec le col factice et avec la plaque de distribution, en pinçant entre la bague extérieure et entre le col factice une plaque ou un film de matériau(x) de joint disposé(e) par-dessus le col factice de bouteille. De manière préférentielle, dans ce mode de réalisation, la plaque de distribution comporte un premier orifice permettant de mettre en communication la chambre amont avec une partie centrale de la plaque ou du film, et un second orifice permettant de mettre en communication la chambre amont avec un bord libre périphérique de la plaque ou du film.

Par col factice, on entend une pièce de révolution, de préférence métallique, reproduisant le profil extérieur de l'extrémité d'un col de bouteille, de manière à pouvoir y fixer un muselet, y sertir une capsule ou y appuyer un joint de capsule dans les mêmes conditions géométriques que sur un col de bouteille. Le col factice est traversé d'une ouverture axiale qui peut être de même diamètre, ou de diamètre inférieur, que le diamètre du col de bouteille authentique qu'il cherche à reproduire. Le profil extérieur du col factice peut être par exemple adapté pour recevoir une capsule à vis en métal ou en matière plastique, pour recevoir un capsule couronne telle s'une capsule de bouteille de bière, ou d'autres types de bouchons ou capsules. Le profil intérieur du col factice peut permettre d'insérer des bouchons particuliers tels qu'un bouchon en liège à capsule et muselet, ou un bouchon en matière plastique également à capsule et muselet. Par partie extérieure au col factice, on entend une partie du bouchon se trouvant hors du volume intérieur au goulot du col factice.

Il est ainsi possible d'appliquer sélectivement la pression amont sur une portion centrale du film/de la plaque, ou sur un bord libre périphérique du film/de la plaque.

La chambre aval peut être équipée d'un capteur de pression unique, ce capteur présentant une précision de mesure d'au moins 1mbar sur une plage de mesure entre zéro et 10mbars. Ce capteur sert successivement à évaluer le volume réel de la chambre aval, et à mesurer la montée en pression de la chambre aval lors de la diffusion de gaz au travers du/des bouchon(s). On peut également choisir de travailler avec des capteurs plus précis (capteur pour vide), par exemple des capteurs présentant une précision relative de la lecture de l'ordre de 15% sur une plage de $10^{-3}$ mbar à 100 mbar.

Avantageusement, un seul capteur de pression est relié à la chambre aval ce capteur présentant une précision de mesure d'au moins 20% sur une plage de mesure s'étendant entre $10^{-4}$ mbar et 1 mbar. De cette manière, le dispositif de mesure reste relativement peu onéreux à réaliser, tout en offrant une précision de mesures satisfaisante.

Selon un autre aspect, un procédé de mesure de la perméabilité aux gaz d'un bouchon de bouteille, comprend les étapes consistant à :

- disposer le bouchon dans une cellule de mesure de manière à délimiter une chambre amont au bouchon et une chambre aval au bouchon, des échanges gazeux étant possibles entre la chambre amont et la chambre aval au travers du bouchon,

- évaluer le volume réel de la chambre aval en présence de ce bouchon en comparant le volume de la chambre aval avec celui d'une chambre de dosage communiquant avec la chambre aval,
- appliquer un vide relatif simultanément dans la chambre amont et dans la chambre aval pendant une durée prédéfinie,
- faire un vide relatif dans la chambre aval, puis isoler la chambre aval des échanges gazeux autre que ceux traversant le bouchon,
- appliquer une pression de consigne amont de gaz dans la chambre amont,
- enregistrer plusieurs mesures de pression prises dans la chambre aval après avoir isolé la chambre aval des échanges gazeux autres que ceux traversant le bouchon.

Selon un mode de réalisation préféré, le procédé comprend en outre une étape où l'on détermine un coefficient caractéristique de la perméabilité des bouchons, en utilisant les valeurs des mesures de pression, du volume réel de la chambre aval, et au moins une mesure de température. Selon une variante de réalisation, une valeur de pression dans la chambre amont peut également être prise en compte dans le calcul du coefficient caractéristique de la perméabilité des bouchons. Selon un mode de réalisation préférentiel, les valeurs mesurées de pression en aval des bouchons, et éventuellement en amont des bouchons, la valeur de température de l'installation et le volume réel de la chambre aval sont les seules mesures utilisées pour calculer le coefficient caractéristique de la perméabilité. Selon un autre mode de réalisation avantageux, la section et l'épaisseur du bouchon peuvent également être prises en compte. Grâce à ce mode de calcul, on évite l'utilisation d'appareillages coûteux tels que des détecteurs d'oxygène ou des spectromètres de masse par exemple.

Par volume réel de la chambre aval, on entend un volume défini entre l'extrémité aval du ou des bouchons et les autres parois de la chambre aval, une fois que le ou les bouchons ont été mis en place entre les chambres amont et aval.

Par vide relatif, on entend ici une valeur de pression sensiblement plus faible que la pression atmosphérique, par exemple une pression inférieure à 2 mbar, ou, suivant le capteur de pression employé, une pression inférieure à $10^{-3}$ mbar.

Le vide relatif appliqué simultanément à la chambre amont et à la chambre aval permet d'extraire du bouchon les gaz qui y sont piégés, il sera donc du même ordre (en terme de pression absolue) que le vide appliqué ensuite dans la chambre aval, qui est par exemple inférieur à 1 mbar.

Le procédé peut en outre comporter une étape consistant à calculer une pente proportionnelle à une variation par rapport au temps, du logarithme de la différence entre la pression de consigne amont et la mesure de pression dans la chambre aval. Selon une variante de mise en oeuvre, peut en comporter une étape consistant à calculer une pente proportionnelle à une variation par rapport au temps, de la mesure de pression dans la chambre aval.

Le procédé peut également comporter une étape d'évaluation du volume réel de la chambre aval, pendant laquelle on vide la chambre de dosage, puis on répartit une quantité de gaz comprise dans la chambre aval, entre la chambre aval et la chambre de dosage, on répète les deux dernières opérations jusqu'à ce que la pression dans la chambre aval soit mesurable par un capteur relié à la chambre aval, puis on isole la chambre aval, on vide encore la chambre de dosage et on répartit encore la quantité de gaz comprise dans la chambre aval entre les deux chambre, afin de mesurer la pression du gaz réparti dans les deux chambres.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue schématique d'un banc de mesure de perméabilité selon l'invention ;
- la figure 2 est un élément d'une cellule de mesure d'un dispositif selon l'invention ;
- la figure 3 est un autre élément d'une cellule de mesure d'un dispositif selon l'invention ;
- la figure 4 est une vue simplifiée en coupe d'une cellule d'un dispositif selon l'invention ;
- la figure 5 est une vue éclatée schématique d'une autre variante de cellule d'un dispositif selon l'invention ;
- la figure 6 est une vue de face d'une des pièces composant la cellule de la figure 5 ;
- la figure 7 est une vue schématique en coupe d'une troisième cellule d'un dispositif selon l'invention ;
- la figure 8 est une vue schématique en coupe d'une quatrième cellule d'un dispositif selon l'invention.

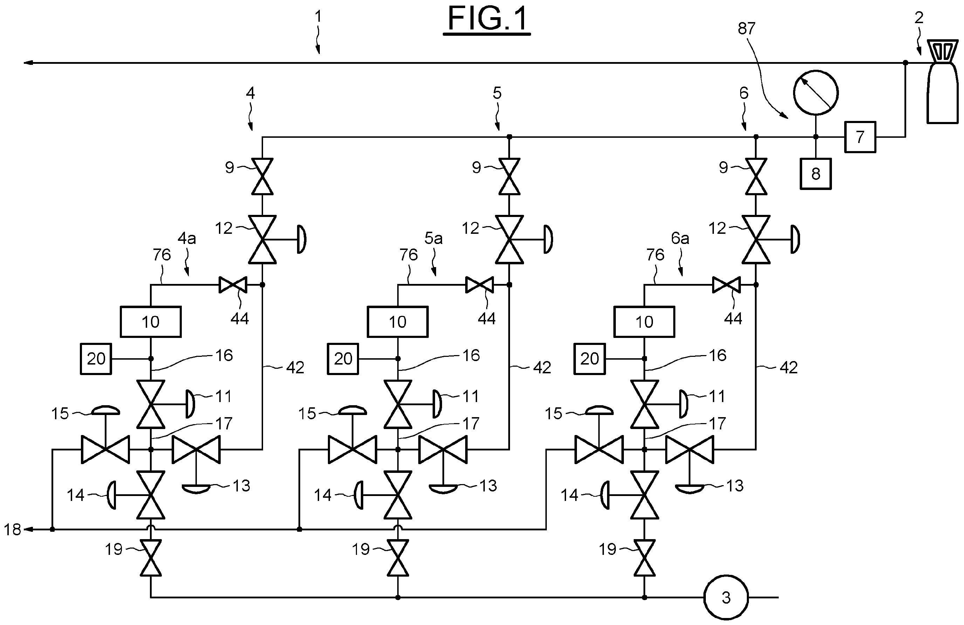

Tel qu'illustré sur la figure 1, un banc de mesure de perméabilité référencé 1 comprend une alimentation en gaz 2, une pompe à vide 3, et une ou plusieurs unités de mesure référencées ici 4, 5, 6, disposées entre l'alimentation en gaz 2 et la pompe à vide 3. Sur la figure 1, trois unités de mesure ont été représentées. Selon les variantes de réalisation, on peut construire des bancs de mesure ne comportant qu'une seule unité de mesure ou comportant plus de trois unités de mesure, par exemple cinq, sept, dix unités de mesure.

Les différentes unités de mesure 4, 5, 6, sont branchées en parallèle entre l'alimentation en gaz 2 et la pompe à vide 3. Une unité de régulation de pression 87 comprenant un capteur de pression amont 7 et un régulateur de pression amont 8, est en outre disposée entre l'alimentation en gaz 2 et les unités de mesure 4, 5, 6. Le régulateur de pression 8 peut comprendre un détendeur (non représenté) permettant d'évacuer un excédent de pression -par rapport à une consigne de pression- qui se produirait en amont de l'unité de régulation 87. Chaque unité de mesure 4, 5, 6 comprend respectivement une conduite de gaz respectivement 4a, 5a, 6a, reliant l'alimentation en gaz 2 et la pompe à vide 3. Sur le trajet de cette conduite de gaz, est interposée une cellule de mesure 10 permettant d'interposer, sur le trajet du gaz circulant de l'alimentation 2 vers la pompe à vide 3, un ou plusieurs bouchons dont on souhaite évaluer la perméabilité.

Nous appellerons dans la suite de la description « position amont » les positions rapprochées de l'alimentation en gaz et « position aval » les positions rapprochées de la pompe à vide 3.

Dans la suite nous décrivons l'architecture d'une unité de mesure en particulier, par exemple l'unité de mesure 6.

Chaque unité de mesure 4, 5, 6 comprend une vanne d'isolement amont 9 permettant de l'isoler de l'alimentation en gaz 2, et comprend une vanne d'isolement aval 19 permettant de l'isoler de la pompe à vide 3. Ces deux vannes d'isolement permettent par exemple de désactiver l'unité de mesure associée et de continuer de travailler sur les autres unités de mesure.

En aval de la vanne 9 est disposée une vanne pilotée 12 d'alimentation qui permet, de même que la vanne 9, d'isoler l'unité de mesure de l'alimentation en gaz 2. Selon une variante de réalisation, l'ouverture et la fermeture progressives de la vanne 12 peuvent être régulées plus finement que celle de la vanne 9, qui est une vanne tout ou rien. Selon une autre variante de réalisation, la vanne 12 peut être une vanne on/off. La vanne 12 d'alimentation est reliée à une unité de commande électronique (UCE) (non représentée), apte à piloter la vanne 12 en fonction des besoins d'alimentation en gaz de la cellule 10 au cours d'un cycle de mesure de perméabilité.

La vanne 19 est également secondée par une vanne pilotée 14 de mise au vide, placée en amont de la vanne 19 et qui, quand la vanne 19 est ouverte, peut assurer la même fonction d'isolement vis-à-vis de la pompe à vide 3 que la vanne 19. La vanne 14 de mise au vide est reliée à l'unité de commande électronique (UCE) (non représentée), apte à piloter la vanne 14 en fonction des besoins en vide de la cellule 10 au cours d'un cycle de mesure de perméabilité.

Le capteur de pression amont 7 et le régulateur de pression amont 8 sont également relié à l'unité de commande électronique.

La cellule de mesure 10 est disposée entre la vanne d'alimentation 12 et la vanne de mise au vide 14. Une vanne de contention aval 11, également pilotée par l'UCE, est disposée en aval de la cellule de mesure 10, entre la cellule de mesure 10 et la vanne de mise au vide 14.

La cellule 10 contient un ou plusieurs bouchons à évaluer, disposés de manière à ce que tous les gaz traversant la cellule soient contraints de traverser l'un ou l'autre des bouchons. La vanne de contention aval 11 est disposée à proximité de la cellule 10, de préférence le plus près possible eu égard aux contraintes d'assemblage des différentes connexions de la conduite gazeuse (connexion de l'aval de la cellule 10 avec la vanne 11 par exemple, connexion d'un capteur de pression à la cellule ou à l'amont de la vanne 11, voir suite de la description...).

Une chambre aval 16 est définie par le volume compris, à l'intérieur de la conduite 4a, 5a, ou 6a et de la cellule 10, entre la face aval du ou des bouchons, et la vanne de contention aval 11. Un capteur de pression 20 est connecté à la chambre aval 16.

Lorsque la vanne de contention aval 11 est fermée, les gaz traversant le ou les bouchons disposés dans la cellule 10 peuvent s'accumuler dans la chambre aval 16.

Une seconde prise d'air 18 est branchée entre chaque couple de vannes pilotées 11 de contention aval et 14 de mise au vide, d'une même unité de mesure. Cette prise d'air 18 peut être isolée par une vanne pilotée 15, séparant l'atmosphère extérieure de la portion de conduite comprise entre la vanne pilotée 11 et la vanne pilotée 14. On prévoit de préférence une vanne pilotée 15 pour chaque unité de mesure 4, 5, 6.

Une conduite de by-pass 42 relie une première portion de conduite disposée entre l'amont de la cellule 10 et l'aval de la vanne d'alimentation 12, et une seconde portion de conduite reliant la vanne de contention aval 11 et la vanne de mise au vide 14. Une vanne de by-pass 13 est disposée sur la conduite de by-pass 42. Quand la vanne de contention aval 11 et la vanne de by-pass 13 sont ouverte, l'amont et l'aval de la cellule 10 sont reliés au travers de la conduite de by-pass 42, les échanges de gaz entre l'amont et l'aval de la cellule 10 étant alors possibles sans traverser les bouchons contenus dans la cellule. Quand la vanne de by-pass 13 est fermée, tous les gaz traversant la cellule 10 sont contraints de traverser l'un des bouchons disposés dans la cellule.

Une chambre amont 76 est ainsi définie par le volume compris, à l'intérieur de la conduite 4a, 5a, ou 6a et de la cellule 10 associée, entre la face amont du bouchon ou des bouchons, la vanne d'alimentation 12, et la vanne de by-pass 13.

Lorsque la vanne d'alimentation 12 ainsi que la vanne de mise à l'air 15 de l'unité se mesure sont fermées, les vannes 11, 14, 19 de l'unité étant ouvertes, la pompe à vide 3 peut faire le vide dans la chambre aval 16 en aspirant le gaz contenu dans cette chambre au travers de la vanne d'isolement aval 11 puis de la vanne de régulation 14 et enfin de la vanne d'isolement aval 19. Si la vanne 13 est ouverte, la pompe 3 permet de faire simultanément le vide dans la chambre amont 76. Si la vanne 13 est fermée, le vide est effectué dans la chambre aval 16 indépendamment de la pression régnant en amont de la vanne 13, notamment de la pression dans la chambre amont 76.

Lorsque les vannes 11 et 13 de l'unité de mesure sont fermées, les vannes 9 et 12 étant ouvertes, du gaz provenant de l'alimentation en gaz 2 peut entrer dans l'unité de mesure par la vanne d'isolement amont 9, traverser la vanne d'alimentation 12, arriver dans la cellule de mesure 10, traverser le ou les bouchons interposés sur son passage, et ressortir dans la chambre aval 16 munie du capteur de pression 20. Si le vide a auparavant été effectué dans la chambre aval 16, tout le gaz présent dans la chambre aval 16 y sera parvenu en traversant le ou les bouchons de la cellule 10.

Le gaz arrivant au travers des bouchons de la cellule de mesure 10 provoque alors une augmentation de pression dans la chambre aval 16, qui peut être mesurée par le capteur 20, à condition que la pression de la chambre aval 16 se trouve dans la gamme de mesure du capteur.

Les portions de conduites comprises entre les quatre vannes 11, 13, 14 et 15, qui peuvent par exemple être constituées par un raccord en croix, délimitent un volume de dosage 17, qui peut être relié ou isolé d'avec la chambre aval 16 au moyen de la vanne de contention aval 11. Ce volume de dosage 17 peut également, tant que la vanne 11 est fermée, être mis sous vide par la pompe 3, au travers des vannes 14 et 19, ou mis en contact avec l'atmosphère au travers de la vanne 15, ou alimenté à partir de l'alimentation en gaz 2 au travers des vannes 9, 12 et 13, tout ceci sans affecter la pression de la chambre aval 16.

Nous allons maintenant décrire l'utilisation du banc en vue d'obtenir une mesure de perméabilité. Les bouchons à tester sont placés dans les cellules de mesure 10 dont la géométrie est décrite plus loin.

Lorsqu'un bouchon est installé dans la cellule 10, la face amont du bouchon est soumise à la pression régnant dans la portion de canalisation comprise entre la cellule 10 et la vanne d'alimentation 12. La face aval du bouchon est soumise à la pression de gaz régnant dans la chambre aval 16. Afin de préconditionner les bouchons, on ferme la vanne d'alimentation 12, on ouvre les vannes 11, 13, 14, 19 et on fait le vide simultanément dans la chambre amont 76 et dans la chambre aval 16 à l'aide de la pompe à vide 3. On évacue ainsi les gaz et l'humidité piégés dans la matière du bouchon, et qui pourraient, si cette précaution n'était pas prise, venir augmenter la pression dans la chambre aval 16 lors des mesures de pression ultérieures. On ferme ensuite la vanne de contention aval 11 afin de maintenir le vide dans la chambre aval 16, on ferme la vanne de by-pass 13, on ouvre la vanne 12 et on applique une pression prédéfinie de gaz à partir de l'alimentation en gaz 2, par exemple 1200 millibars d'oxygène.

Pour ce faire, la vanne d'alimentation 12 peut être une vanne on/off, la pression en amont de la vanne 12 est régulée par l'unité de régulation de pression 87. Au moment nécessaire, on ouvre donc simplement la vanne d'alimentation 12 pour imposer la pression amont dans la chambre amont 76. Une vanne de perte de charge 44, du type par exemple vanne à aiguille, est alors avantageusement interposée entre la vanne 12 et la cellule de mesure 10, afin de créer une perte de charge et d'éviter une application trop brutale de la pression amont après avoir effectué le vide en amont et en aval du bouchon, ce qui pourrait par exemple causer un déplacement du bouchon contenu dans la cellule 10.

Selon une autre variante de réalisation, si la vanne 12 est une vanne pilotée de manière proportionnelle, l'ouverture de la vanne 12 peut être régulée par l'unité de contrôle électronique à l'aide de valeurs reçues du capteur de pression amont 7. L'installation peut alors ne pas comprendre de vanne 44.

Afin de faciliter la régulation de pression par l'unité de régulation 87, on choisit de préférence une pression de gaz appliquée en amont de la cellule 10, qui est supérieure à la pression atmosphérique. Les bouchons enfermés dans la cellule 10 se trouvent donc soumis à une pression de gaz amont sur leur face amont, et au vide créé dans la chambre aval 16 sur leur face aval. Les molécules de gaz qui traversent alors le bouchon font progressivement augmenter la pression dans la chambre aval 16. L'unité de commande électronique reliée au capteur de pression 20 provoque une acquisition de valeur de pression à des intervalles successifs permettant de construire une courbe de montée en pression de la chambre aval 16. On peut par exemple prévoir d'enregistrer une valeur de pression toutes les minutes, jusqu'à ce que la pression dans la chambre aval ait atteint une pression seuil de l'ordre de 150mbars. Au lieu d'un enregistrement à intervalles de temps prédéterminé, on peut également, à l'aide d'un détecteur d'événement, enregistrer des valeurs de pressions successives différant chacune de la valeur enregistrée précédente d'une valeur minimale. On évite ainsi de stocker des valeurs "sans intérêt" car alignées sur un plateau de pression. Si les premières mesures, permettent de déterminer les pentes recherchées (voir ci après) avant même que la pression ne dépasse 10mbars, on pourra préférer se limiter à ces premières valeurs. Dans la majorité des cas, une semaine suffit pour obtenir un nombre satisfaisant de mesures.

Les points de mesure obtenus sont ensuite comparés à une courbe théorique, pour en extraire des paramètres de la courbe expérimentale permettant de quantifier la perméabilité du bouchon.

Les points de la courbe peuvent également être utilisés pour déterminer un débit d'oxygène (par exemple en moles/jour) au travers du ou des bouchons. Afin d'évaluer le débit d'oxygène correspondant à un point particulier de la courbe expérimentale de pression, on peut évaluer la pente $\dfrac{dp}{dt}$ de la courbe au voisinage de ce point, et utiliser l'équation des gaz parfaits, soit pV=nRT

Où :

p :     la pression de gaz dans la chambre aval (en Pa),

V : le volume réel de la chambre aval (en m$^3$),

n : la quantité de gaz en moles dans la chambre aval,

R : la constante universelle des gaz parfaits (soit 8, 314J.K$^{-1}$.mol$^{-1}$),

T la température en Kelvin de la pièce et du banc de mesure, c'est-à-dire la température en C° à laquelle on a ajouté 273,15°, soit T = T°C +273,15.

En dérivant l'équation des gaz parfaits par rapport au temps, on obtient la relation : $\dfrac{dn}{dt} = \dfrac{dp}{dt} x \dfrac{Vx24x3600}{RxT}$,

ou $\dfrac{dp}{dt}$ est la pente de la courbe de pression en Pa/s, et $\dfrac{dn}{dt}$ est le débit de gaz traversant le ou les bouchons, en mol/jour.

Si l'on souhaite par exemple exprimer un débit de gaz en cm$^3$.jour$^{-1}$ (par exemple pour l'oxygène, ce sera 1'"OTR", en cm$^3$/jour), on sait qu'une mole de gaz occupe 22,4 litres soit 22 400 cm$^3$. Donc

$$OTR = \frac{dn}{dt} \ x \ 22\ 400.$$

Si l'on souhaite par exemple exprimer un débit de gaz en mg.jour$^{-1}$ (par exemple pour l'oxygène, ce sera 1'"OTR", en mg/jour), on sait qu'une mole de $O_2$ pèse 32000 mg. Donc

$$OTR = \frac{dn}{dt} \ x \ 32000.$$

Dans ce type de calcul, la différence de pression, l'épaisseur et la surface d'échange ne sont pas pris en compte.

Afin de calculer le coefficient de perméabilité Pe du ou des bouchons, on effectue une transformation logarithmique de la courbe de pression en traçant une courbe y(t) avec

$$y(t) = -\ln\left[\frac{p_d(t) - p_u}{p_{d0} - p_u}\right] = -\ln[p_d(t) - p_u] + k,$$

où :

p$_d$(t) : est la pression dans la chambre aval à l'instant t (en Pa),

p$_u$ : est la pression de gaz appliquée dans la chambre amont (en Pa),

$$k = \ln[p_{d0}(t) - p_u],$$

p$_{d0}$ : est par exemple la pression dans la chambre aval correspondant au premier point de mesure (en Pa).

On linéarise ensuite cette courbe y(t) suivant des techniques connues pour déterminer sa pente moyenne $\dfrac{dy}{dt}$, et on en déduit le coefficient de perméabilité Pe du bouchon suivant la formule :

$$Pe = \frac{e.V_a.T_s}{A.p_s.T.V_m} x \frac{dy}{dt}$$

Où :

Pe : est le coefficient de perméabilité recherché (en mol.m$^{-1}$.Pa$^{-1}$.s$^{-1}$),

A : la section totale (en m$^2$) des bouchons traversés par le gaz,

e : l'épaisseur (en m) du bouchon ou l'épaisseur moyenne des bouchon c'est-à-dire l'épaisseur de matière que doit traverser le gaz ,

$p_s$ : une pression standard égale à 101 325 Pa,

t : (en s) l'abscisse des temps correspondant aux différents instants de mesure de pression ,

T : la température (en K) du banc de mesure,

$T_s$ : une température standard de 273 K,

$V_a$ : le volume réel de la chambre aval en m$^3$,

$V_m$ : le volume molaire du gaz avec lequel on fait la mesure, par exemple 0,0224 m$^3$/mole pour l'oxygène.

Il est à noter que le choix de la pression initiale $P_{do}$ n'influe pas sur le résultat car en changeant la valeur de $P_{do}$, on décale simplement la courbe y(t) d'une valeur fixe suivant l'axe des ordonnées sans modifier la pente de la courbe.

On peut également, en première approximation, considérer que quand la pression $p_d$ dans la chambre aval est très faible devant la pression $p_u$ appliquée dans la chambre amont, $y(t) \cong \dfrac{p_d}{p_u}$ , ce qui donne une valeur approximative pour le coefficient de perméabilité Pe sensiblement égale à $\dfrac{e.V_a.T_s}{A.p_s.T.V_m} \, x \, \dfrac{1}{p_u} \, x \, \dfrac{d(p_d)}{dt}$ . On peut donc, suivant une variante de mise en oeuvre, se contenter de déterminer directement la pente de la pression par rapport au temps, au lieu d'effectuer la transformation logarithmique.

Il est à noter que le coefficient de perméabilité Pe est intrinsèque au matériau mesuré, la géométrie de l'échantillon (surface, épaisseur) étant prise en compte dans la formule ci-dessus afin de ramener la valeur de Pe à une unité de surface et à une unité d'épaisseur. Le débit de gaz, par exemple l'OTR, est une valeur globale dépendant de la géométrie de l'échantillon.

L'unité de commande électronique peut être configurée de manière à effectuer automatiquement l'exploitation de l'ensemble des mesures de pression obtenues. On peut également envisager une exploitation semi-manuelle des mesures, où un opérateur sélectionne par exemple la portion de la courbe de mesure qui semble la plus favorable pour donner des valeurs pertinentes.

Une estimation précise du volume réel $V_a$ de la chambre aval est bien sûr nécessaire pour obtenir une estimation précise du coefficient de perméabilité Pe. Ce volume réel Va étant susceptible de varier suivant le positionnement de la face aval du bouchon ou des bouchons dans la cellule de mesure 10, un positionnement qui ne serait pas strictement reproductible des bouchons dans la cellule peut entraîner des écarts de mesure qui peuvent fausser par exemple des comparaisons entre deux matériaux de bouchon.

Afin d'éviter de tels artefacts, après chaque mise en place d'un bouchon et d'une série de bouchons dans la cellule de mesure 10, on procède à une évaluation du volume réel de la chambre aval 16. Pour ce faire, on procède comme suit. Le volume de la chambre de dosage 17 est invariable et est connu par une mesure préalable, par exemple effectuée en remplissant cette chambre de dosage d'eau, et en pesant cette eau pour déterminer son volume.

Après avoir mis en place le ou les bouchons dans la cellule de mesure 10, on ferme les vannes 13 et 15, on ouvre les vannes 11, 14 et 19, on actionne la pompe à vide 3 et on referme ensuite la vanne 14. On a ainsi fait le vide simultanément dans la chambre aval 16 et dans la chambre de dosage 17. On ferme ensuite la vanne de contention aval 11, on ouvre la vanne de mise à l'air 15, ce qui remplit la chambre de dosage 17 d'air à la pression atmosphérique. On referme la vanne 15 et on ouvre la vanne 11, ce qui permet de répartir l'air de la chambre de dosage 17 entre la chambre aval 16 et la chambre de dosage 17.

On referme ensuite la vanne 11. On ouvre les vannes 14 et 19 et on refait le vide dans la chambre de dosage 17.On referme ensuite la vanne 14. On vérifie si la pression dans la chambre aval 16 est dans la gamme mesurable par le capteur de pression 20. Si elle ne l'est pas on effectue un fractionnement du gaz compris dans la chambre aval 16 : on ouvre la vanne 11 pour répartir le gaz entre les deux chambres 16 et 17, on referme la vanne 11, on refait le vide dans la chambre de dosage 17, on referme la vanne 14, et on rouvre la vanne 11 afin de redistribuer le gaz restant dans la chambre aval 16.

Une fois que la pression dans la chambre aval 16 se trouve dans la gamme de mesure du capteur 20, on note la valeur $p_1$ de cette pression, on refait le vide dans la chambre de dosage 17, on referme la vanne 14, on rouvre la vanne 11 et on mesure la pression $p_2$ du gaz distribué entre les deux chambres 16 et 17. Comme gamme de mesure du capteur, on peut prendre un intervalle de pressions recommandé par le fournisseur du capteur, ou un intervalle de valeurs de pressions arbitraire dans lequel le capteur de pression 2 donne des valeurs reproductibles.

Si l'on note $V_a$ le volume réel de la chambre aval 16, et $V_{17}$ le volume de la chambre de dosage 17, l'équation des gaz parfaits permet d'écrire que :

$$p_1.V_a = p_2.\left(V_a + V_{17}\right)$$

soit $V_a = \dfrac{V_{17}.p_2}{p_1 - p_2}$ .

L'unité de commande électronique peut être configurée pour effectuer automatiquement, après la mise en place des cellules de mesure 10 munies des bouchons à caractériser, la détermination du volume réel $V_a$ de la chambre aval 16 de chaque unité de mesure 4, 5 ou 6.

Pour ce faire, l'unité de commande électronique peut être programmée pour effectuer les fractionnements du gaz contenu dans la chambre aval 16 jusqu'à ce que la valeur de la pression dans la chambre 16 se trouve dans une gamme considérée comme gamme de mesure fiable pour le capteur de pression 20. Selon une variante de mise en oeuvre, l'unité de commande électronique peut être programmée pour effectuer les fractionnements du gaz contenu dans la chambre aval 16 un nombre prédéterminé de fois.

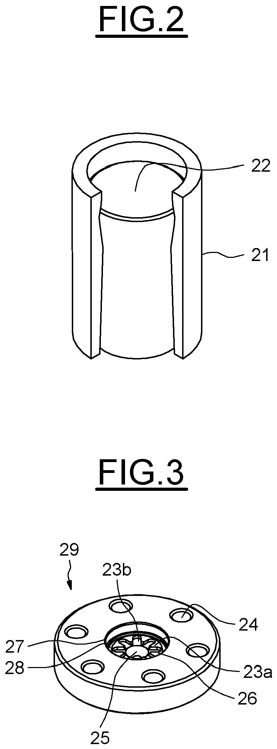

Les figures 2 à 6 illustrent quelques exemples de cellules de mesure permettant d'interposer entre la chambre amont et la chambre aval les bouchons que l'on souhaite tester.

La figure 2 illustre une bague de maintien 21 enserrant un bouchon 22 à tester. Nous appelons par la suite direction axiale la direction de l'axe longitudinal du bouchon. La bague 21 est montrée en coupe partielle. La bague 21 enserre le bouchon 22 de manière étanche sur toute la circonférence du bouchon. Le profil intérieur de la bague reproduit un profil type de col de bouteille afin de placer le bouchon dans des conditions de compression représentatives de son usage normal. La bague peut être réalisée dans des alliages métalliques simples à usiner, par exemple un alliage d'aluminium. On peut également envisager des bagues en matière synthétique, avec un revêtement intérieur permettant de garantir, entre la bague et le bouchon, un coefficient de friction qui reste comparable à celle du coefficient de friction du bouchon contre du verre.

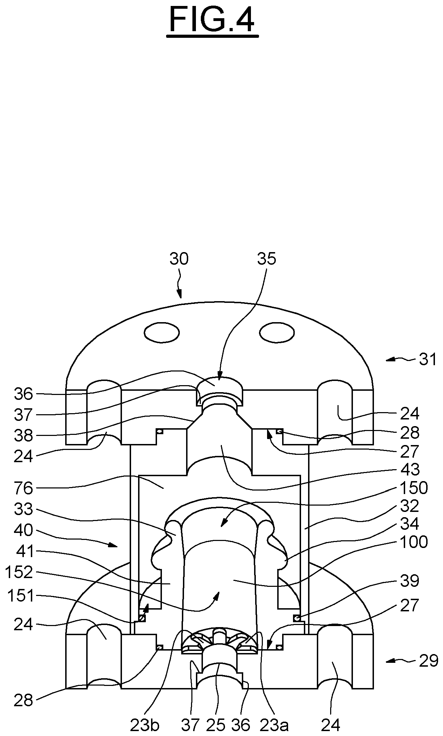

La bague 21 est enserrée entre une plaque de distribution 31 visible par exemple sur la figure 4 et une plaque de collecte 29 visible en perspective sur la figure 3. La plaque de distribution 31 et la plaque de collecte 29 présentent des formes globalement similaires. Elles sont munies chacune d'un creux de centrage 27 permettant de loger et maintenir radialement une des extrémités de la bague 21. Elles sont traversées par un ensemble de trous de serrage 24 permettant de passer des vis, des entretoises ou des tiges filetées reliant la plaque de distribution 21 la plaque de collecte 29 pour maintenir les extrémités de la bague 21 serrées axialement chacune à l'intérieur d'un creux de centrage 27.

Afin d'assurer l'étanchéité de la cellule 10 vis-à-vis des gaz traversant le bouchon 22, un joint torique 28 est prévu à l'intérieur de chaque creux de centrage 27 de la plaque de distribution 31 et de la plaque de collecte 29.

La plaque de collecte 29 est munie en son centre d'un orifice collecteur 25 permettant de récupérer les gaz ayant traversé le bouchon 22. Le bouchon 22 étant susceptible de venir en appui contre le fond du creux de centrage 27, une rosace collectrice 26 est prévue sur ce creux de centrage sous forme d'un relief en étoile délimitant à la fois des branches radiales 23a en relief servant de butée axiale à la face aval du bouchon 22, et délimitant des canaux de drainage 23b permettant de collecter le gaz ayant traversé le bouchon sur une surface supérieure à celle de l'orifice collecteur 25, notamment quand le bouchon 22 se trouve en butée contre le creux de centrage 27.

La figure 4 illustre une forme particulière de cellule de mesure 30, destinée à mesurer la perméabilité de bouchons à muselet, de type bouchon de champagne.

La cellule 30 comprend une plaque de collecte 29 identique à celle décrite à la figure 3. Elle comprend également une plaque de distribution 31 similaire à la plaque de collecte 29, mais différant de la plaque de collecte 29 au niveau du relief entourant un orifice central d'alimentation 35 par lequel le gaz est amené sur la partie amont du bouchon (non représenté). La rosace collectrice 26 entourant l'orifice collecteur est ainsi remplacée par un profil tronconique 38 moins coûteux à usiner.

L'orifice collecteur 25 et l'orifice d'alimentation 35 peuvent chacun comporter une ou plusieurs zones de perçage droit 36 ainsi qu'un épaulement 37 permettant de limiter le déplacement axial d'une extrémité de conduite (on représentée) amenant le gaz vers la cellule ou d'une extrémité de conduite (non représentée) collectant le gaz présent dans la cellule en aval du bouchon (on représenté).

De même que sur la figure 3, la plaque de collecte 29 et la plaque de distribution 31 comportent chacune un creux de centrage 27. Les diamètres des creux de centrage des deux plaques sont comparables et peuvent être prévus pour loger indifféremment une bague simple 21 telle que décrite à la figure 2, ou une chambre 40 pour bouchon effervescent telle que représentée sur la figure 4. La chambre 40 pour bouchon effervescent de la figure 4 comprend une bague extérieure 32 formant une chambre globalement cylindrique, dont l'extrémité supérieure est configurée pour venir s'imbriquer de manière étanche dans le creux de centrage 27 de la plaque de distribution 31, et dont le diamètre intérieur maximal est élargi par rapport au diamètre du creux de centrage 27, de manière à pouvoir y insérer, par un orifice inférieur 151, une bague à épaulement 33 et un bouchon à muselet (non représenté) débordant radialement de cette bague 33. La bague extérieure 32 présente en partie supérieure un orifice axial 43.

Le profil tronconique 38 de la plaque de distribution 31 permet d'assurer une transition entre le diamètre de l'orifice d'alimentation 35 et le diamètre de l'orifice supérieur 43 de la bague extérieure 32.

La bague à épaulement 33 comporte une portion de col factice 41 reproduisant le relief intérieur et extérieur d'un col de bouteille apte à recevoir un bouchon à muselet, c'est-à-dire d'un col de bouteille muni d'un épaulement 34 permettant de retenir le muselet du bouchon. La bague à épaulement 33 est traversée d'un conduit axial 100 reliant un orifice d'entrée 150 à un orifice de sortie 152 de la bague à épaulement 33.

La bague à épaulement 33 présente une base inférieure dont la géométrie est complémentaire de celle du creux de centrage 27 de la plaque de collecte 29, afin de pouvoir s'y emmancher de manière étanche. La bague à épaulement 33 est conçue de manière à pouvoir s'emboîter à l'intérieur de la bague extérieure 32 une fois que le col factice 41 a été équipé d'un bouchon à muselet, de manière à ce que l'enceinte 40 soit étanche aux gaz autres que ceux arrivant par l'orifice 43 de la bague extérieure 32 ou repartant par le centre du col factice 41.

Afin d'assurer cette étanchéité, des joints interbagues 39 peuvent être disposés autour de la base de la bague à épaulement 33. La cellule 30 ainsi définie permet de tester la perméabilité d'un bouchon muni de son muselet, en appliquant une pression de gaz sur la partie du bouchon extérieure au col factice 41, et en mesurant la pression des gaz parvenant à l'orifice collecteur 25. Les deux extrémités de la cellule ayant des diamètres extérieurs identiques, la cellule peut être montée en intervertissant les positions des deux extrémités par rapport à la plaque de distribution 31 et par rapport à la plaque de collecte 29, pour mesurer une perméabilité à partir de la base du bouchon, correspondant à la perméabilité d'échappement du $CO_2$ vers l'extérieur de la bouteille.

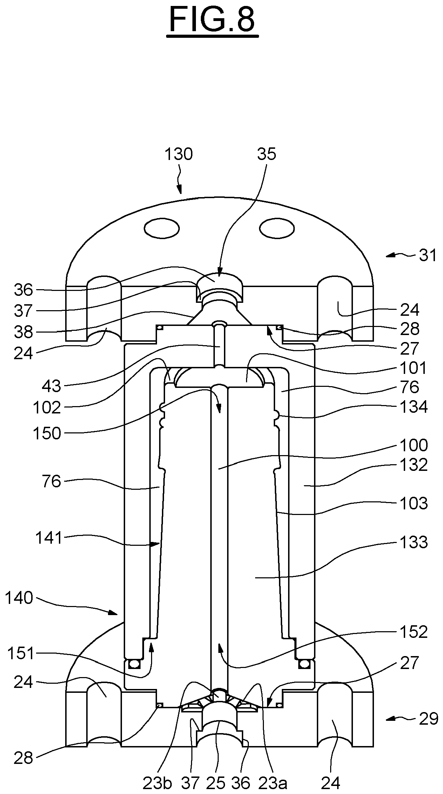

La figure 8 illustre une forme particulière de cellule de mesure 130, destinée à mesurer la perméabilité de capsules à vis, en particulier de capsules à vis métalliques. On retrouve sur la figure 8 des éléments communs à la figure 4, les mêmes éléments étant désignés par les mêmes références. Une enceinte 140 pour capsule à vis comprend une bague extérieure 132 en forme de cloche, définissant une chambre globalement cylindrique. L'extrémité supérieure de la bague 132 est configurée pour venir s'imbriquer de manière étanche dans le creux de centrage 27 de la plaque de distribution 31. Le diamètre intérieur maximal de la bague 132 est plus large que le diamètre du creux de centrage 27, de manière à pouvoir insérer dans la bague 132, par un orifice inférieur, un porte-échantillon 133 comportant une portion 141 en forme de col factice de bouteille. Le col factice 141 reproduit sur sa partie extérieure un filetage 134 d'une bouteille apte à être fermée par une capsule à vis (non représentée). Le filetage 134 du col factice est réalisé de manière à pouvoir y assembler une capsule à vis avec des moyens de production existants destinés à des bouteilles réelles. Un support (non représenté), par exemple en forme de bloc cylindrique, peut être prévu, reproduisant la forme de la partie inférieure d'une bouteille. L'ensemble constitué par le support avec le porte échantillon assemblé dessus, peut ainsi être compatible, du point de vue dimensionnel, avec les moyens de production précités. Une capsule à vis peut ainsi être sertie sur le porte échantillon 133 dans les mêmes conditions qu'elle serait sertie sur une bouteille réelle. La bague extérieure 132 présente en partie supérieure un orifice axial 43. Le porte échantillon 133 est percé d'un conduit axial 100 de diamètre inférieur au diamètre intérieur d'un col de bouteille en verre, afin de limiter le volume de la chambre aval dont le conduit axial 100 définit une portion. Un creux de collecte 101 est ménagé autour de l'extrémité supérieure -c'est à dire de l'extrémité opposée à la plaque de collecte- du conduit axial 100, afin que la capsule (non représentée) soit en appui sur une portion annulaire 102 du col factice, la surface de la portion annulaire étant de surface comparable à la surface d'appui de la capsule sur un col de bouteille en verre. On note que dans le mode de réalisation de la figure 4 comme dans le mode de réalisation de la figure 8, la bague intérieure 33 ou le porte échantillon 133, une fois insérés dans la bague extérieure 32, respectivement 132, présentent une portion de surface libre 103 sensiblement axiale, contenue à l'intérieur de la bague 33 ou de la cloche 133. C'est sur cette surface, à l'aide de l'épaulement 34 ou du filetage 134, que peut être sertie ou fixée une portion d'un bouchon ou d'une capsule extérieur(e) au col.

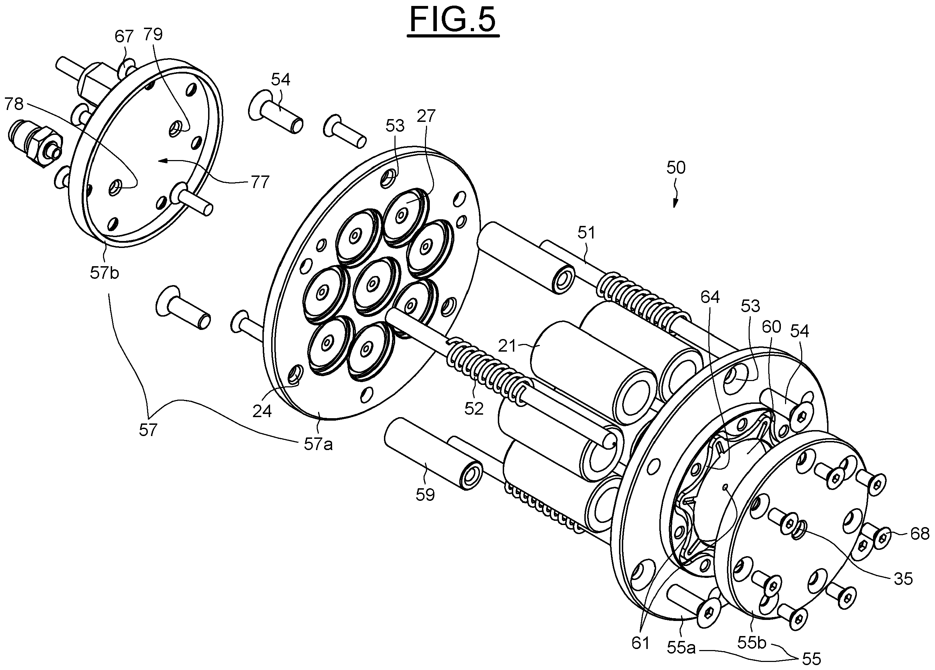

La figure 5 est une vue éclatée d'une cellule 50 multibagues permettant d'appliquer la pression amont de gaz simultanément sur plusieurs bouchons, afin d'obtenir une valeur moyenne de perméabilité sur plusieurs bouchons. On retrouve sur la figure 5 des éléments présents sur les figures 1 à 4, les mêmes éléments étant alors désignés par les mêmes références.

Un ensemble de huit bagues 21 est ici interposé entre une plaque de distribution 55 et une plaque de collecte 57. Le maintien des bagues 21 entre les plaques 55 et 57 est assuré par des entretoises 59 interposées axialement entre les deux plaques, dans lesquelles entretoises viennent se visser des vis 54 de fermeture de la cellule 50. Chaque vis 54 traverse un orifice non fileté d'une des plaques 55 ou 57, et vient s'accrocher dans un filetage intérieur à une entretoise 59.

Les entretoises étant légèrement plus courtes que les bagues, il est ainsi possible d'assurer le serrage des bagues entre les deux plaques. Afin de faciliter l'écartement des deux plaques et la mise en place des bagues 21, des barres de guidage 51 munies de ressorts 52 d'écartement des plaques peuvent être soudées par une extrémité à l'une des plaques et coulisser à l'intérieur d'un orifice de guidage de l'autre plaque.

Les longueurs de ressorts 52 peuvent être prévues pour être du même ordre que les longueurs des bagues 21, ou pour être légèrement supérieures. La plaque de distribution 55 devant cette fois alimenter plusieurs bagues, elle est réalisée en deux parties, définissant entre elles un volume de distribution 60 rendu étanche par un joint 64. Le volume de distribution 60 relie un orifice d'alimentation central 35 auquel, peut être assemblé une conduite amenant le gaz vers la cellule, et des orifices 61 alimentant le centre de chacune des bagues 21.

Le volume de distribution 60 est délimité entre une base de plaque de distribution 55a, et un couvercle de plaque de distribution 55b. La base de plaque de distribution 55a porte les creux 27 de centrage supérieurs de chacune des bagues 21, ainsi que les orifices 53 permettant de positionner les vis d'assemblage 54 de serrage des bagues. Le couvercle de plaque de distribution 55b est traversé par l'orifice central de distribution 35, et est assemblé à la base de plaque de distribution 55a par un groupe de vis 68.

De manière similaire, la plaque de collecte 57 comprend une base de plaque de collecte 57a et un couvercle de plaque de collecte 57b, relié par un ensemble de vis d'assemblage 67, et définissant entre eux un volume collecteur 77. Le volume collecteur 77 relie des orifices collecteurs 25 de chaque bague 21, percés dans la base de plaque de collecte 57a, et deux orifices de sortie 78 et 79, percés dans le couvercle de plaque de collecte 57b. Sur les orifices de sortie 78 et 79, peuvent être soudés respectivement, un premier connecteur permettant de brancher une canalisation allant vers la pompe à vide 3, et un second connecteur permettant de brancher un capteur de pression 20 (non représenté sur la figure 5) apte à mesurer la pression régnant à l'intérieur du volume collecteur 77. On peut envisager des variantes de réalisation où le couvercle de plaque de collecte ne comporte qu'un orifice de sortie, le capteur de pression 20 étant alors connecté en aval de cet orifice de sortie, sur la canalisation allant vers la pompe à vide 3.

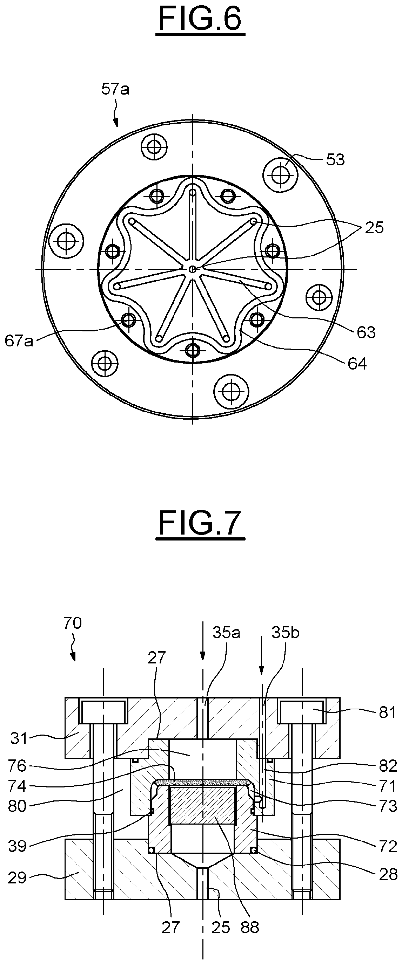

La figure 6 illustre la face de la plaque 57a qui est masquée sur la figure 5. On constate que la forme de la base de plaque de collecte 57a, vue du côté du volume collecteur 77, tel que sur la figure 6, est similaire à la partie supérieure de la base de plaque de distribution 55a que l'on peut voir sur la figure 5.

Les orifices 25 de collecte sont en particulier entourés par un joint 64, qui est sensiblement en forme d'étoile, afin de pouvoir contourner par l'extérieur de la plaque les orifices de collecte 25, et de pouvoir contourner par le centre de la plaque un groupe d'alésages filetés 67a permettant de serrer les vis d'assemblage 67.

Le volume collecteur 77 est cependant inférieur, en volume, au volume de distribution 61, puisque le volume collecteur 77 se limite à un groupe 63 de canaux en étoile reliant les huit orifices 25 de collecte et les deux orifices 78 et 79. Par comparaison, le volume de distribution 61 est plus important car il comprend une portion cylindrique centrale dont le diamètre est limité par le diamètre intérieur du joint 64.

Le volume de distribution 60 est ainsi moins coûteux à usiner. Le volume collecteur 77, un peu plus coûteux à réaliser, permet en revanche de limiter le volume total de la chambre aval 16 dont il fait partie, et d'améliorer la précision des mesures de pression dans cette chambre aval.

En effet, pour un volume de gaz donné traversant les bouchons, l'augmentation de pression engendrée dans la chambre aval 16 est plus perceptible si le volume de cette chambre est réduit.

La figure 7 illustre un autre modèle de cellule de mesure 70, destinée cette fois mesurer la perméabilité de joints de type capsule. Comme dans le mode de réalisation précédent, la cellule 70 comprend une plaque de distribution 31 et une plaque de collecte 29, reliées ici axialement par des vis 81 permettant d'en régler l'espacement.

De manière similaire au mode de réalisation de la figure 4, une enceinte 80 est définie par la plaque distributrice 31, la plaque de collecte 29, et deux bagues 71 et 72, dont une bague supérieure 71 insérée à l'intérieur d'un creux de centrage 27 de la plaque de distributrice munie d'un joint torique 28, et une bague inférieure 72 appuyée à l'intérieur d'un creux de centrage 27 de la plaque de collecte 29. La bague inférieure 72 reproduit la géométrie de l'extrémité d'un col de bouteille, destiné à recevoir des capsules de fermeture couvrant l'extrémité du col. Elle est configurée de manière à pouvoir être insérée à l'intérieur de la bague supérieure tout en assurant l'étanchéité entre les deux bagues à l'aide d'un joint interbagues 39.

Un intervalle 73 est ménagé entre la bague inférieure 72 et la bague supérieure 71, dans lequel il est possible de loger un joint de capsule 74, de manière à réserver un espace périphérique vide autour du joint 74. Le joint de capsule est alors maintenu sur sa périphérie par pincement entre les deux bagues 71 et 72. Un support poreux 88 est disposé à l'intérieur du col factice de la bague inférieure 72 de manière à ce qu'un joint de capsule 74 pincé entre les bagues 71 et 72, ne soit pas aspiré à l'intérieur du col lorsqu'on fait le vide en aval de ce joint 74.La pression de serrage des vis de la cellule est choisie de manière à ce que le joint soit pincé avec une pression de sertissage comparable à la pression de sertissage d'une capsule. Il est à noter qu'un insert poreux peut également être disposé à l'intérieur de la bague sous le bouchon dans le montage décrit en figures 2 ou 4, afin de réduire le volume effectif de la chambre aval.

La plaque de collecte 29 présente un orifice collecteur 25 disposé en dessous du support poreux 88. La plaque de distribution 31 est traversée par un orifice d'alimentation central 35a permettant d'amener du gaz sous pression au dessus de la partie centrale du joint 74, c'est-à-dire sur la surface couvrant le support poreux 88. La plaque de distribution 31 est également traversée par un orifice d'alimentation périphérique 35b, qui se poursuit par un canal latéral 82 traversant la bague supérieure 71 et rejoignant la périphérie de l'intervalle 73.

Du gaz sous pression injecté dans l'orifice d'alimentation périphérique 35b, est ainsi susceptible de traverser le joint 74 en direction de l'orifice collecteur 25, soit en diffusant à l'interface entre le joint 74 et la bague inférieure 72, soit en diffusant à l'intérieur de la matière du joint 74 à partir de la périphérie de ce joint.

Cette cellule 70 de mesure de joint capsule permet d'effectuer des mesures de perméabilité suivant le principe décrit plus haut si on applique la pression de gaz au niveau de l'orifice d'alimentation central 35a.

Cette cellule de mesure 70 permet également de faire des essais comparatifs de perméabilité de différents joints 74, ces essais prenant en compte des effets de diffusion d'interface et/ou de diffusion par le bord du joint. Le mécanisme de diffusion par le bord du joint peut en effet être différent de celui de la diffusion dans le sens de l'épaisseur du joint.

L'objet de l'invention ne se limite pas aux exemples de réalisation décrits, et peut se décliner en de nombreuses variantes. Le nombre d'unités de mesure 10 pour chaque banc de mesure 1 peut varier, de même que le nombre de bagues qui peuvent être montées sur une cellule de mesure 10 donnée. On peut prévoir de monter en parallèle plusieurs cellules pour bouchons à muselet, ou de monter en parallèle plusieurs cellules pour joints de capsules. Il est possible de brancher plusieurs unités de mesure sur une seule unité de régulation de pression, comme sur la figure 1, ou réguler la pression amont de chaque unité de mesure par une unité de régulation de pression dédiée.

On peut connecter l'unité de contrôle électronique à toutes les vannes décrites, qui sont alors des vannes pilotées, c'est-à-dire pilotées électroniquement, ou réserver certaines des vannes à un pilotage manuel, par exemple les vannes d'isolation 9 et 19, et/ou la vanne de by-pass 42. On peut également piloter manuellement toutes les vannes et n'avoir aucune vanne pilotée.

Les vannes 11, 12, 13, 14 peuvent être des vannes actionnables de manière proportionnelle, ou peuvent être, toutes, ou certaines d'entre elles, des vannes on/off. Dans le cas où la vanne d'alimentation 12 est une vanne on/off, la régulation de la pression amont est assurée uniquement par l'unité de régulation de pression 87. Une vanne de perte de charge 44, du type par exemple vanne à aiguille, est alors avantageusement interposée entre la vanne 12 et la cellule de mesure 10, afin de créer une perte de charge et d'éviter une application trop brutale de la pression amont après avoir effectué le vide en amont et en aval du bouchon, ce qui pourrait par exemple causer un déplacement du bouchon.

Dans l'exemple décrit, les cellules de mesure 10 sont alimentées en gaz par une plaque supérieure, et l'aspiration vers la pompe à vide 3 se fait à partir d'une plaque inférieure, mais il est bien entendu que l'alimentation en gaz pourrait se faire par la plaque inférieure et l'aspiration par la plaque supérieure.

Le nombre de vannes équipant le banc de mesure 1 ou le nombre de vannes d'une unité de mesure peuvent varier par rapport à l'exemple décrit à la figure 1. On pourrait par exemple ne pas avoir de vanne d'isolement amont 9 ou ne pas avoir de vanne d'isolement aval 19. La présence de ces vannes d'isolement permet des interventions sélectives de maintenance sur l'une des unités de mesures, tout en continuant à utiliser les autres unités de mesures du dispositif.

Au niveau des connexions des conduites amenant, ou collectant, les gaz de la cellule 10, on peut par exemple prévoir, que la conduite de gaz arrivant à la cellule de mesure 10 soit vissée, ce qui est un mode d'assemblage peu onéreux, alors que le raccord permettant de relier la même cellule de mesure à la conduite formant l'aval de la chambre aval 16 soit au contraire soudé. De cette manière on limite les fuites du gaz arrivant en aval du bouchon, et on augmente la précision de la mesure. D'autres choix de méthodes d'assemblage des canalisations arrivant et partant de la cellule 10 sont cependant possibles. On peut choisir d'utiliser uniquement des raccords vissés ou uniquement des raccords soudés.

Afin de déterminer la température T du gaz présent dans la chambre aval 16 et dans la chambre de dosage 17, température permettant d'appliquer les équations décrites plus haut, on peut prévoir de travailler dans une pièce climatisée, avec une prise d'air 18 également prélevée sur cette pièce climatisée. Cette solution n'est bien sûr applicable que si les gaz manipulés sont non toxiques. On peut alors utiliser la température mesurée par un capteur dans la pièce comme valeur T à reporter dans les équations citées plus haut. La température T peut être de préférence mesurée au niveau du bâti supportant les cellules de mesure 10.

On peut également prévoir de calorifuger une partie du banc de mesure comprenant les cellules 10 de mesure, les chambres aval 16, et les chambres de dosage 17. On peut alors par exemple utiliser, un capteur de température prenant la température à l'intérieur de cette enceinte réduite, ou un capteur de température individuel prenant la température à l'intérieur de la chambre aval 16 associée à chaque cellule de mesure.

Afin que la quantité de gaz à détecter puisse engendrer une pression détectable par le capteur 20, on essaie de réduire dans la mesure du possible le volume minimal, et le volume réel, de la chambre aval 16. Typiquement pour une cellule à un seul bouchon, le volume minimal compris entre l'aval du bouchon et la vanne 11 pourra ainsi être de l'ordre de quelques $cm^3$.

Dans le cas d'une cellule apte à accueillir plusieurs bouchons, le volume global de la chambre aval 16 prenant en compte la zone aval à l'ensemble des bouchons sera plus important, mais le volume minimal de la chambre aval reste inférieur à $10cm^3$, et de préférence est inférieur à $5cm^3$.

Afin que les opérations de fractionnement de gaz entre la chambre aval 16 et la chambre de dosage 17 donnent des rapports de pression exploitables, il est souhaitable que les volumes des deux chambres 16 et 17 restent du même ordre de grandeur, et en tout cas ne diffèrent pas de plus d'un ordre de grandeur.

On pourra par exemple utiliser des chambres de dosage ayant un volume de l'ordre de 2 à $6cm^3$, par exemple entre $3 cm^3$ et $4,5 cm^3$. Opportunément, on choisira des rapports entre le volume minimal de la chambre aval 16 et le volume de la chambre de dosage 17, tels que le volume de la chambre de dosage 17 soit compris entre 1/10 du volume minimal de la chambre aval 16 et cinq fois le volume minimal de la chambre aval 16.

L'évaluation du volume réel de la chambre aval sera encore simplifiée si le volume de la chambre de dosage et le volume minimal de la chambre aval sont proches l'un de l'autre, par exemple si le volume de la chambre de dosage est compris entre ¼ et quatre fois le volume de la chambre aval.

La pression amont peut être légèrement supérieure à l'atmosphère (1,2 atm par exemple), pour évaluer la perméabilité des bouchons à l'oxygène. La pression amont peut être plus importante encore pour accélérer le processus de mesure, par exemple de l'ordre de trois atmosphères pour mesurer la perméabilité à l'oxygène. On s'éloigne alors des conditions réelles de fonctionnement du bouchon, la comparaison des perméabilités entre différents matériaux restant valable à conditions d'essais égales. La pression amont peut être sensiblement plus élevée que l'atmosphère, par exemple de l'ordre de 7 atm, pour mesurer la perméabilité aux gaz usuellement contenus sous pression par les bouchons, par exemple le $CO_2$.

Le dispositif de mesure selon l'invention permet d'évaluer de manière fiable et reproductible la perméabilité d'échantillons de matière épaisse, tels que des bouchons de vin ou de champagne. La mesure peut être faite en un temps limité par rapport aux méthodes de mesure classiques mesurant la diffusion par coulométrie. La construction du dispositif de mesure selon l'invention ne nécessite que des éléments de canalisation et de vannes standard pour gaz sous pression, ainsi que des capteurs largement diffusés sur le marché tels que des capteurs de pression ou des capteurs de vide de type Pirani, basés sur une mesure de conductance thermique. Des capteurs un peu moins précis, par exemple de type capacitif, peuvent également être utilisés. On évite ainsi d'avoir recours à des dispositifs onéreux tels que des appareils de mesure coulométriques de diffusion d'oxygène.

## Revendications

1. Dispositif (1) pour la mesure de la perméabilité aux gaz d'au moins un bouchon (22), notamment d'un bouchon (22) de bouteille ou de bocal, comprenant

   - une cellule de mesure (10) dans laquelle le ou les bouchons peuvent être montés de manière à délimiter une chambre amont (76) au bouchon et une chambre aval (16) au bouchon, des échanges gazeux n'étant possibles entre la chambre amont (76) et la chambre aval (16) qu'en traversant le ou les bouchons,
   - une alimentation en gaz (2) permettant d'imposer dans la chambre amont (76) une pression amont d'un premier gaz, de première valeur de pression prédéfinie,
   - un dispositif de pompage (3) aval permettant d'imposer dans la chambre aval (16) une dépression initiale de deuxième valeur prédéfinie, inférieure à la première valeur, puis d'isoler la chambre aval (16) d'échanges gazeux autres que ceux traversant le bouchon (22),
   - un capteur (20) de pression connecté à la chambre aval (16), la chambre aval (16) étant configurée pour définir, en présence du bouchon, un premier volume ayant pour valeur un volume réel de la chambre aval qui reste constant lorsque la pression intérieure de la chambre aval varie entre la pression appliquée et la dépression initiale, le volume réel de la chambre aval ayant pour limite inférieure, en fonction des positions d'insertion de différents bouchons, un volume minimal de la chambre aval,

   **caractérisé en ce que** la chambre aval (16) est reliée par une première vanne (11) avec une chambre de dosage (17) également de volume constant, la chambre de dosage étant disposée de manière à, quand la première vanne (11) est fermée, pouvoir être successivement reliée à, et isolée d'avec, l'atmosphère (18) ou une alimentation en gaz, le volume de la chambre de dosage étant compris entre 0,5 et 10 fois le volume minimal de la chambre aval, et **en ce que** le dispositif comprend en outre une unité de commande configurée pour évaluer, pour chaque nouvelle mesure de perméabilité d'un bouchon, le volume réel de la chambre aval en présence de ce bouchon (16) en comparant le volume réel de la chambre aval avec le volume de la chambre de dosage (17).

2. Dispositif de mesure selon la revendication 1, dans lequel le capteur (20) est placé en amont de la première vanne (11) de manière à permettre d'effectuer des mesures de pression dans la chambre aval (16), quand la première vanne est fermée.

3. Dispositif de mesure selon l'une des revendications 1 ou 2, comprenant une deuxième vanne (12) permettant d'isoler la chambre amont (76) de l'alimentation en gaz (2), et comprenant une conduite de dérivation (42) obturable par une troisième vanne (13), entre la chambre amont (76) et la chambre de dosage (17).

4. Dispositif de mesure selon la revendication précédente, dans lequel la chambre de dosage (17) est reliée au dispositif de pompage (3) par une canalisation munie d'une quatrième vanne (14) la séparant de la chambre de dosage (17).

5. Dispositif de mesure selon la revendication précédente, dans lequel la chambre de dosage (17) est munie d'une cinquième vanne (15) permettant de la faire communiquer avec l'atmosphère (18).

6. Dispositif de mesure selon l'une quelconque des revendications précédentes, comprenant une unité électronique de pilotage configurée pour enregistrer une suite de valeurs délivrées par le capteur (20) de pression, sur un intervalle de temps postérieur à une étape d'alimentation en gaz de la chambre amont (76), et/ou postérieur à un intervalle de temps postérieur à une étape de mise à la dépression initiale de la chambre aval (16).

7. Dispositif de mesure selon l'une quelconque des revendications précédentes, dans lequel le volume de la chambre aval est inférieur à $10cm^3$, et de préférence inférieur à $5cm^3$.

8. Dispositif de mesure selon l'une quelconque des revendications précédentes, dans lequel la cellule de mesure (10) est configurée pour interposer entre la chambre amont (76) et la chambre aval (16) un ou plusieurs bouchons (22), disposés chacun à l'intérieur d'un contenant globalement cylindrique (21, 32) enserré entre une plaque de distribution de gaz (30, 55) faisant partie de l'enceinte de la chambre amont (76), et une plaque de collecte de gaz (29, 57) faisant partie de l'enceinte de la chambre aval (16).

9. Dispositif de mesure selon la revendication 8, la cellule de mesure (10) comprenant au moins un col factice (41, 141) de bouteille dont la base est reliée de manière étanche à la plaque de collecte (29, 57), et une bague extérieure (32, 132) apte à être assemblée par-dessus le col factice de manière étanche avec le col factice (41, 141), et apte à être assemblée de manière étanche avec la plaque de distribution (31, 55), de manière à ce que la chambre amont (76) communique avec au moins une partie, extérieure au col factice, d'un bouchon ou d'une capsule assemblé(e) dans ou sur le col factice.

10. Dispositif de mesure selon la revendication 8, dans lequel la cellule de mesure (10) comprend un col factice (72) de bouteille dont la base est reliée de manière étanche à la plaque de collecte (29, 57), et comprend une bague extérieure (71) apte à être assemblée de manière étanche avec le col factice (72) et à être assemblée de manière étanche avec la plaque de distribution (31, 55), en pinçant entre la bague extérieure et entre le col factice, une plaque ou un film de matériau(x) de joint (74) disposé(e) par-dessus le col factice de bouteille (72), et
dans lequel la plaque de distribution (31) comporte un premier orifice (35a) permettant de mettre en communication la chambre amont uniquement avec une partie centrale de la plaque ou du film (74), et un second orifice (35b) permettant de mettre en communication la chambre amont uniquement avec un bord libre périphérique de la plaque ou du film (74).

11. Dispositif de mesure selon l'une quelconque des revendications précédentes, dans lequel un seul capteur de pression (20) est relié à la chambre aval (16), ce capteur (20) présentant une précision de mesure d'au moins 1 mbar sur une plage de mesure s'étendant entre zéro et 10 mbars.

12. Dispositif de mesure selon l'une quelconque des revendications précédentes, dans lequel un seul capteur de pression (20) est relié à la chambre aval (16), ce capteur (20) présentant une précision de mesure d'au moins 20% sur une plage de mesure s'étendant entre $10^{-4}$ mbars et 1 mbar.

13. Procédé de mesure de la perméabilité aux gaz d'un bouchon de bouteille, comprenant les étapes consistant à :

   - disposer le bouchon (22) dans une cellule de mesure (10) de manière à délimiter une chambre amont au bouchon (76) et une chambre aval (16) au bouchon, des échanges gazeux étant possibles entre la chambre amont (76) et la chambre aval (16) au travers du bouchon,
   - évaluer le volume réel de la chambre aval en présence de ce bouchon (16) en comparant le volume réel de la chambre aval avec celui d'une chambre de dosage (17) configurée pour pouvoir communiquer avec la chambre aval,
   - appliquer un vide relatif simultanément dans la chambre amont (76) et dans la chambre aval (16) pendant une durée prédéfinie,
   - faire le vide dans la chambre aval (16), puis isoler la chambre aval des échanges gazeux autre que ceux traversant le bouchon,
   - appliquer une pression de consigne amont de gaz dans la chambre amont (76),
   - enregistrer plusieurs mesures de pression prises dans la chambre aval (16) après avoir isolé la chambre aval (16) des échanges gazeux autres que ceux traversant le bouchon (22).

**14.** Procédé de mesure selon la revendication précédente, comprenant en outre une étape consistant à calculer une pente proportionnelle à une variation par rapport au temps du logarithme de la différence entre la pression de consigne amont et la mesure de pression dans la chambre aval (16).

**15.** Procédé de mesure selon les revendications 13 ou 14, comprenant en outre une étape d'évaluation du volume réel de la chambre aval (16), pendant laquelle on vide la chambre de dosage (17), puis on répartit une quantité de gaz initialement comprise dans la chambre aval (16), entre la chambre aval (16) et la chambre de dosage (17), on répète les deux dernières opérations jusqu'à ce que la pression dans la chambre aval (16) soit mesurable par un capteur (20) relié à la chambre aval (16), puis on isole la chambre aval (16), on vide encore la chambre de dosage (17) et on répartit encore la quantité de gaz comprise dans la chambre aval (16) entre les deux chambres, afin de mesurer la pression du gaz réparti dans les deux chambres (16,17).

**Patentansprüche**

**1.** Vorrichtung (1) zum Messen der Gasdurchlässigkeit mindestens eines Korkens (22), insbesondere eines Flaschen- oder Glasbehälterkorkens (22), umfassend:

- eine Messzelle (10), in welcher der oder die Korken derart montiert werden können, dass sie eine zum Korken stromaufwärtige Kammer (76) und eine zum Korken stromabwärtige Kammer (16) begrenzen, wobei Gasaustausche zwischen der stromaufwärtigen Kammer (76) und der stromabwärtigen Kammer (16) nur möglich sind, indem der oder die Korken durchquert werden,
- eine Gasversorgung (2), die es ermöglicht, in der stromaufwärtigen Kammer (76) einen stromaufwärtigen Druck eines ersten Gases mit einem ersten vorgegebenen Druckwert auszuüben,
- eine stromabwärtige Pumpvorrichtung (3), die es ermöglicht, in der stromabwärtigen Kammer (16) einen Anfangsunterdruck mit einem zweiten vorgegebenen Wert, der geringer als der erste Wert ist, auszuüben, dann die stromabwärtige Kammer (16) von Gasaustauschen außer denen, die den Korken (22) durchqueren, zu trennen,
- einen Drucksensor (20), der mit der stromabwärtigen Kammer (16) verbunden ist, wobei die stromabwärtige Kammer (16) so ausgebildet ist, dass sie in Gegenwart des Korkens ein erstes Volumen definiert, das als Wert ein tatsächliches Volumen der stromabwärtigen Kammer hat, das konstant bleibt, wenn der Innendruck der stromabwärtigen Kammer zwischen dem ausgeübten Druck und dem Anfangsunterdruck variiert, wobei das tatsächliche Volumen der stromabwärtigen Kammer als unteren Grenzwert, in Abhängigkeit von den Einführpositionen verschiedener Korken, ein Mindestvolumen der stromabwärtigen Kammer hat,

**dadurch gekennzeichnet, dass** die stromabwärtige Kammer (16) über ein erstes Ventil (11) mit einer Dosierkammer (17), ebenfalls mit konstantem Volumen, verbunden ist, wobei die Dosierkammer so angeordnet ist, dass sie, wenn das erste Ventil (11) geschlossen ist, nacheinander mit der Atmosphäre (18) oder einer Gasversorgung verbunden und davon getrennt werden kann, wobei das Volumen der Dosierkammer zwischen dem 0,5-Fachen und dem 10-Fachen des Mindestvolumens der stromabwärtigen Kammer beträgt, und dass die Vorrichtung ferner eine Steuerungseinheit umfasst, die so ausgebildet ist, dass sie bei jeder neuen Durchlässigkeitsmessung eines Korkens das tatsächliche Volumen der stromabwärtigen Kammer in Gegenwart dieses Korkens (16) bewertet, indem sie das tatsächliche Volumen der stromabwärtigen Kammer mit dem Volumen der Dosierkammer (17) vergleicht.

**2.** Messvorrichtung nach Anspruch 1, bei welcher der Sensor (20) stromauf des ersten Ventils (11) platziert ist, so dass er es ermöglicht, Druckmessungen in der stromabwärtigen Kammer (16) durchzuführen, wenn das erste Ventil geschlossen ist.

**3.** Messvorrichtung nach einem der Ansprüche 1 oder 2, die ein zweites Ventil (12) umfasst, das es ermöglicht, die stromaufwärtige Kammer (76) von der Gasversorgung (2) zu trennen, und die eine Abzweigleitung (42) umfasst, die mit einem dritten Ventil (13), zwischen der stromaufwärtigen Kammer (76) und der Dosierkammer (17), abgesperrt werden kann.

**4.** Messvorrichtung nach dem vorhergehenden Anspruch, bei der die Dosierkammer (17) mit der Pumpvorrichtung (3) über eine Leitung verbunden ist, die mit einem vierten Ventil (14) versehen ist, das sie von der Dosierkammer (17) trennt.

5. Messvorrichtung nach dem vorhergehenden Anspruch, bei der die Dosierkammer (17) mit einem fünften Ventil (15) versehen ist, das es ermöglicht, sie mit der Atmosphäre (18) kommunizieren zu lassen.

6. Messvorrichtung nach einem der vorhergehenden Ansprüche, die eine elektronische Steuereinheit umfasst, die dazu ausgebildet ist, eine Folge von vom Drucksensor (20) abgegebenen Werten über ein Zeitintervall nach einem Schritt der Gasversorgung der stromaufwärtigen Kammer (76) und/oder nach einem Zeitintervall nach einem Schritt des Herstellens des Anfangsunterdrucks der stromabwärtigen Kammer (16) zu registrieren.

7. Messvorrichtung nach einem der vorhergehenden Ansprüche, bei der das Volumen der stromabwärtigen Kammer weniger als 10 cm$^3$ und bevorzugt weniger als 5 cm$^3$ beträgt.

8. Messvorrichtung nach einem der vorhergehenden Ansprüche, bei der die Messzelle (10) dazu ausgebildet ist, zwischen die stromaufwärtige Kammer (76) und die stromabwärtige Kammer (16) einen oder mehrere Korken (22) zu setzen, die jeweils im Inneren eines insgesamt zylindrischen Behältnisses (21, 32) angeordnet sind, das zwischen einer Gasverteilerplatte (30, 55), die Teil des Gehäuses der stromaufwärtigen Kammer (76) ist, und einer Gassammelplatte (29, 57), die Teil des Gehäuses der stromabwärtigen Kammer (16) ist, eingespannt ist.

9. Messvorrichtung nach Anspruch 8, wobei die Messzelle (10) mindestens einen nachgebildeten Flaschenhals (41, 141) umfasst, dessen Basis dicht mit der Sammelplatte (29, 57) verbunden ist, und einen Außenring (32, 132), der geeignet ist, über dem nachgebildeten Hals dicht mit dem nachgebildeten Hals (41, 141) zusammengebaut zu werden, und geeignet ist, dicht mit der Verteilerplatte (31, 55) zusammengebaut zu werden, so dass die stromaufwärtige Kammer (76) mit mindestens einem Teil, außerhalb des nachgebildeten Halses, eines Korkens oder einer Kapsel kommuniziert, der (die) in oder auf dem nachgebildeten Hals montiert ist.

10. Messvorrichtung nach Anspruch 8, bei der die Messzelle (10) einen nachgebildeten Flaschenhals (72) umfasst, dessen Basis dicht mit der Sammelplatte (29, 57) verbunden ist, und einen Außenring (71) umfasst, der geeignet ist, dicht mit dem nachgebildeten Hals (72) zusammengebaut zu werden und dicht mit der Verteilerplatte (31, 55) zusammengebaut zu werden, wobei zwischen den Außenring und zwischen den nachgebildeten Hals eine Platte oder Folie aus Dichtungsmaterial(ien) (74) geklemmt wird, die über dem nachgebildeten Flaschenhals (72) angeordnet ist, und bei der die Verteilerplatte (31) eine erste Öffnung (35a) aufweist, die es ermöglicht, die stromaufwärtige Kammer nur mit einem zentralen Teil der Platte oder Folie (74) in Verbindung zu bringen, und eine zweite Öffnung (35b), die es ermöglicht, die stromaufwärtige Kammer nur mit einem freien Umfangsrand der Platte oder Folie (74) in Verbindung zu bringen.

11. Messvorrichtung nach einem der vorhergehenden Ansprüche, bei der ein einziger Drucksensor (20) mit der stromabwärtigen Kammer (16) verbunden ist, wobei dieser Sensor (20) eine Messgenauigkeit von mindestens 1 mbar über einen Messbereich von null bis 10 mbar aufweist.

12. Messvorrichtung nach einem der vorhergehenden Ansprüche, bei der ein einziger Drucksensor (20) mit der stromabwärtigen Kammer (16) verbunden ist, wobei dieser Sensor (20) eine Messgenauigkeit von mindestens 20 % über einen Messbereich von 10$^{-4}$ mbar bis 1 mbar aufweist.

13. Verfahren zum Messen der Gasdurchlässigkeit eines Flaschenkorkens, umfassend die Schritte, die in Folgendem bestehen:

    - Anordnen des Korkens (22) in einer Messzelle (10) derart, dass eine zum Korken stromaufwärtige Kammer (76) und eine zum Korken stromabwärtige Kammer (16) begrenzt werden, wobei Gasaustausche zwischen der stromaufwärtigen Kammer (76) und der stromabwärtigen Kammer (16) durch den Korken hindurch möglich sind,
    - Bewerten des tatsächlichen Volumens der stromabwärtigen Kammer in Gegenwart dieses Korkens (16), indem das tatsächliche Volumen der stromabwärtigen Kammer mit dem einer Dosierkammer (17) verglichen wird, die so ausgebildet ist, dass sie mit der stromabwärtigen Kammer kommunizieren kann,
    - Anwenden eines relativen Vakuums gleichzeitig in der stromaufwärtigen Kammer (76) und in der stromabwärtigen Kammer (16) während einer vorgegebenen Dauer,
    - Herstellen eines Vakuums in der stromabwärtigen Kammer (16), dann Trennen der stromabwärtigen Kammer von Gasaustauschen außer denen, die den Korken durchqueren,
    - Anwenden eines stromaufwärtigen Gassolldrucks in der stromaufwärtigen Kammer (76),
    - Registrieren mehrerer Druckmessungen, die in der stromabwärtigen Kammer (16) abgegriffen wurden, nachdem die stromabwärtige Kammer (16) von Gasaustauschen außer denen, die den Korken (22) durchqueren, getrennt wurde.

14. Messverfahren nach dem vorhergehenden Anspruch, umfassend ferner einen Schritt, der darin besteht, eine Gefälle zu berechnen, das proportional zu einer Änderung in Bezug auf die Zeit des Logarithmus der Differenz zwischen dem stromaufwärtigen Solldruck und der Druckmessung in der stromabwärtigen Kammer (16) ist.

15. Messverfahren nach den Ansprüchen 13 oder 14, umfassend ferner einen Schritt des Bewertens des tatsächlichen Volumens der stromabwärtigen Kammer (16), während dessen die Dosierkammer (17) entleert wird, dann eine Gasmenge, die anfänglich in der stromabwärtigen Kammer (16) enthalten ist, zwischen der stromabwärtigen Kammer (16) und der Dosierkammer (17) verteilt wird, die beiden letzten Vorgänge wiederholt werden, bis der Druck in der stromabwärtigen Kammer (16) von einem Sensor (20), der mit der stromabwärtigen Kammer (16) verbunden ist, messbar ist, dann die stromabwärtige Kammer (16) getrennt wird, die Dosierkammer (17) nochmals entleert wird und die Gasmenge, die in der stromabwärtigen Kammer (16) enthalten ist, zwischen den beiden Kammern verteilt wird, um den Druck des in den beiden Kammern (16, 17) verteilten Gases zu messen.

## Claims

1. Device (1) for measuring the gas-permeability of at least one cork (22), in particular a bottle or jar cork (22), comprising

   - a measuring cell (10) in which the cork(s) can be mounted so as to delimit a chamber (76) upstream of the cork and a chamber (16) downstream of the cork, wherein gases can only be exchanged between the upstream chamber (76) and the downstream chamber (16) by passing through the cork(s),
   - a gas supply (2) allowing an upstream pressure of a first gas with a first predefined pressure value to be imposed in the upstream chamber (76),
   - a downstream pumping device (3) allowing an initial reduced pressure of a second predefined value, lower than the first value, to be imposed in the downstream chamber (16), then isolating the downstream chamber (16) from gas exchanges other than those passing through the cork (22),
   - a pressure sensor (20) connected to the downstream chamber (16), wherein the downstream chamber (16) is configured to define, in the presence of the cork, a first volume with a value of an actual volume of the downstream chamber which remains constant when the internal pressure of the downstream chamber varies between the applied pressure and the initial reduced pressure, wherein the actual volume of the downstream chamber has as a lower limit, a minimal volume of the downstream chamber depending on the insertion positions of different corks,

   **characterized in that** the downstream chamber (16) is connected via a first valve (11) to a metering chamber (17) also of constant volume, wherein the metering chamber is arranged such that when the first valve (11) is closed, it can be successively connected to and isolated from the atmosphere (18) or a gas supply, wherein the volume of the metering chamber lies between 0.5 and 10 times the minimal volume of the downstream chamber,
   and **in that** the device also comprises a control unit configured to evaluate, for each new measurement of permeability of a cork, the actual volume of the downstream chamber in the presence of this cork (16) by comparing the actual volume of the downstream chamber with the volume of the metering chamber (17).

2. Measuring device according to Claim 1, wherein the sensor (20) is placed upstream of the first valve (11) so as to allow the performance of pressure measurements in the downstream chamber (16) when the first valve is closed.

3. Measuring device according to either of Claims 1 and 2, comprising a second valve (12) allowing the upstream chamber (76) to be isolated from the gas supply (2), and comprising a branch pipe (42), which can be sealed by a third valve (13), between the upstream chamber (76) and the metering chamber (17).

4. Measuring device according to the preceding claim, wherein the metering chamber (17) is connected to the pumping device (3) via a pipeline equipped with a fourth valve (14) separating it from the metering chamber (17).

5. Measuring device according to the preceding claim, wherein the metering chamber (17) is equipped with a fifth valve (15) allowing it to be brought into communication with the atmosphere (18).

6. Measuring device according to any of the preceding claims, comprising an electronic control unit configured to record a set of values supplied by the pressure sensor (20) over a time interval following a step of gas supply to the upstream chamber (76), and/or after a time interval following a step of initial pressure reduction of the downstream chamber (16).

7. Measuring device according to any of the preceding claims, wherein the volume of the downstream chamber is less than 10 cm$^3$, preferably less than 5 cm$^3$.

8. Measuring device according to any of the preceding claims, wherein the measuring cell (10) is configured to interpose, between the upstream chamber (76) and the downstream chamber (16), one or more corks (22) which are each arranged inside a generally cylindrical container (21, 32) clamped between a gas distribution plate (30, 55) forming part of the enclosure of the upstream chamber (76), and a gas collection plate (29, 57) forming part of the enclosure of the downstream chamber (16).

9. Measuring device according to Claim 8, wherein the measuring cell (10) comprises at least one artificial bottle neck (41, 141), the base of which is connected in sealed fashion to the collection plate (29, 57), and an outer ring (32, 132) able to be attached in sealed fashion to the artificial neck (41, 141) over the artificial neck, and able to be attached in sealed fashion to the distribution plate (31, 55) such that the upstream chamber (76) communicates with at least a part, outside the artificial neck, of a cork or capsule attached in or on the artificial neck.

10. Measuring device according to Claim 8, wherein the measuring cell (10) comprises an artificial bottle neck (72), the base of which is connected in sealed fashion to the collection plate (29, 57), and comprises an outer ring (71) able to be attached in sealed fashion to the artificial neck (72) and able to be attached in sealed fashion to the distribution plate (31, 55) by clamping a plate or film of sealing material(s) (74) between the outer ring and the artificial neck, over the artificial bottle neck (72), and
wherein the distribution plate (31) comprises a first orifice (35a) allowing the upstream chamber to be brought into communication solely with the central part of the plate or film (74), and a second orifice (35b) allowing the upstream chamber to be brought into communication solely with a free peripheral edge of the plate or film (74).

11. Measuring device according to any of the preceding claims, wherein a single pressure sensor (20) is connected to the downstream chamber (16), this sensor (20) having a measurement precision of at least 1 mbar over a measurement range extending between zero and 10 mbar.

12. Measuring device according to any of the preceding claims, wherein a single pressure sensor (20) is connected to the downstream chamber (16), this sensor (20) having a measurement precision of at least 20% over a measurement range extending between 10$^{-4}$ mbar and 1 mbar.

13. Method for measuring the gas-permeability of a bottle cork, comprising steps consisting of:

- arranging the cork (22) in a measuring cell (10) so as to delimit a chamber (76) upstream of the cork and a chamber (16) downstream of the cork, wherein gas can be exchanged between the upstream chamber (76) and the downstream chamber (16) through the cork,
- evaluating the actual volume of the downstream chamber in the presence of this cork (16) and comparing the actual volume of the downstream chamber with that of a metering chamber (17) configured to be able to communicate with the downstream chamber,
- applying a relative vacuum simultaneously in the upstream chamber (76) and in the downstream chamber (16) for a predefined duration,
- creating the vacuum in the downstream chamber (16), then isolating the upstream chamber from gas exchanges other than those passing through the cork,
- applying an upstream reference gas pressure in the upstream chamber (76),
- recording several pressure measurements taken in the downstream chamber (16) after having isolated the downstream chamber (16) from gas exchanges other than those passing through the cork (22).

14. Measurement method according to the preceding claim, also comprising a step of calculating a gradient proportional to a variation over time of the logarithm of the difference between the upstream reference pressure and the pressure measurement in the downstream chamber (16).

15. Measurement method according to Claim 13 or 14, also comprising a step of evaluating the actual volume of the downstream chamber (16), during which the metering chamber (17) is evacuated; then distributing a gas quantity, initially contained in the downstream chamber (16), between the downstream chamber (16) and the metering chamber (17); repeating the last two operations until the pressure in the downstream chamber (16) can be measured by a sensor (20) connected to the downstream chamber (16); then isolating the downstream chamber (16), again evacuating the metering chamber (17) and again distributing the gas quantity contained in the downstream chamber (16) between the two chambers, in order to measure the gas pressure distributed in the two chambers (16, 17).

FIG.1

EP 2 597 446 B1

# FIG.2

# FIG.3

# FIG.4

FIG.5

# FIG.6

# FIG.7

# FIG.8

## RÉFÉRENCES CITÉES DANS LA DESCRIPTION

**Documents brevets cités dans la description**

- US 2007227233 A1
- WO 2011089367 A1
- US 3548634 A
- US 2004123646 A1
- DE 1063832 B